# EUROPÄISCHE PATENTANMELDUNG

(11) **EP 1 612 066 A1**
(43) Veröffentlichungstag der Anmeldung: **04.01.2006**
(21) Anmeldenummer: 05012082.3
(22) Anmeldetag: 04.06.2005
(51) Int. Cl.: B60G 7/00, F16F 1/38

(54) **Ringscheibe für ein Gleitlager**

(30) Priorität: 28.06.2004 DE 102004031302
(71) Anmelder: ZF FRIEDRICHSHAFEN AG, 88038 Friedrichshafen (DE)
(72) Erfinder: Wagener, Keit, 49143 Bissendorf (DE); Fangmann, Thomas, 49413 Dinklage (DE); Fangmann, Michael, 49393 Lohne (DE)

(57) **Zusammenfassung**

Ringscheibe für ein Gleitlager, mit einem ersten Ringelement (12) und einer an dessen erster Stirnseite (17) angeordneten Dichtung (23), wobei an der zweiten Stirnseite (19) des ersten Ringelements (12) ein zweites Ringelement (13) befestigt ist. Dabei bestehen die beiden Ringelemente (12,13) aus unterschiedlichen Materialien.

## Beschreibung

Die vorliegende Erfindung betrifft eine Ringscheibe für ein Gleitlager, mit einem ersten Ringelement und einer an dessen ersten Stirnseite angeordneten Dichtung.

Derartige Ringscheiben sind aus dem Stand der Technik bekannt. Zum Beispiel offenbart die DE 40 36 051 C1 ein elastisches Gleitlager für ein Kraftfahrzeug, mit einer Innenbuchse und einer diese umgebenen Kunststoffschicht, an deren Enden jeweils ein Kantenwulst vorgesehen ist. Die Kunststoffschicht wird von einer Außenbuchse (Außenhülse) umfasst, wobei zwischen den Kantenwulsten und der Außenbuchse jeweils eine Kunststoffscheibe (Ringscheibe) axial festgelegt ist.

Wenn dieses Gleitlager in ein Kraftfahrzeug eingebaut wird, kann es zu einem Kontakt zwischen einem Kraftfahrzeugbauteil und der Ringscheibe kommen, so dass während des Betriebs des Kraftfahrzeugs eine relative Verdrehung zwischen Kraftfahrzeugbauteil und Ringscheibe auftreten kann, was zu einer unerwünschten Geräuschentwicklung führt. Auch kann an wenigstens einem Ende der Innenbuchse eine Kappe fest angeordnet sein, die mit der Ringscheibe in Kontakt steht, so dass in diesem Fall eine relative Verdrehung zwischen der Kappe und der Ringscheibe mit dem Ergebnis einer unerwünschten Geräuschentwicklung möglich ist. Ferner kann langfristig nicht ausgeschlossen werden, dass ein zwischen der Kunststoffschicht und der Außenbuchse eingebrachtes Schmiermittel, zum Beispiel durch Salzwasser, ausgespült wird.

Ausgehend von diesem Stand der Technik liegt der Erfindung die Aufgabe zugrunde, eine Ringscheibe für ein Gleitlager zu schaffen, mit welcher die unerwünschte Geräuschentwicklung vermieden werden kann.

Diese Aufgabe wird mit einer Ringscheibe nach Anspruch 1 gelöst. Bevorzugte Weiterbildungen sind in den Unteransprüchen gegeben.

Die erfindungsgemäße Ringscheibe für ein Gleitlager weist ein erstes Ringelement und eine an dessen erster Stirnseite angeordnete Dichtung auf, wobei an der zweiten Stirnseite des ersten Ringelements ein zweites Ringelement befestigt ist. Die beiden Ringelemente bestehen dabei aus unterschiedlichen Materialien.

Dadurch, dass die beiden Ringelemente aus unterschiedlichen Materialien bestehen, kann das zweite Ringelement aus einem Material hergestellt sein, welches im eingebauten Zustand der Ringscheibe eine möglichst große Haftreibung hinsichtlich des Kraftfahrzeugbauteils oder der Kappe aufweist. Dagegen kann das zweite Ringelement aus einem Material hergestellt sein, welches im eingebauten Zustand hinsichtlich der Außenhülse des Gleitlagers eine möglichst geringe Haft- und Gleitreibung aufweist. Somit kann sichergestellt werden, dass die Haftreibung zwischen der Ringscheibe und dem Kraftfahrzeugbauteil oder der Kappe größer als die Haft- bzw. Gleitreibung zwischen der Ringscheibe und der Außenhülse ist, so dass eine relative Verdrehung nur zwischen der Ringscheibe und der Außenhülse und nicht zwischen der Ringscheibe und dem Kraftfahrzeugbauteil bzw. der Kappe erfolgt. Aus diesem Grund ist es mit der erfindungsgemäßen Ringscheibe möglich, ein Gleitlager zu schaffen, bei dem die aus dem Stand der Technik bekannte unerwünschte Geräuschentwicklung vermieden werden kann.

Das erste Ringelement kann etwa 2/3 der Höhe der Ringscheibe einnehmen. Ferner sind die Dichtung und das erste Ringelement bevorzugt aus unterschiedlichen Materialen hergestellt, so dass für die Dichtung ein Material gewählt werden kann, dass die Dichtfunktion im besonderen Maße gewährleistet. Somit ist es möglich, das Gleitlager auch langfristig gegen ein Ausspülen des Gleitmittels und/oder ein Eindringen von Feuchtigkeit oder Verunreinigungen zu schützen.

Im eingebauten Zustand liegt das erste Ringelement mit seiner ersten Stirnseite bevorzugt unmittelbar an der Außenhülse an. Ferner liegt die Dichtung unmittelbar an der Außenhülse an, um ein Eindringen von Feuchtigkeit und Verunreinigungen in das Innere des Lagers zu verhindern sowie ein Ausspülen von in das Gleitlager eingebrachtem Schmiermittel zu unterbinden. Die Dichtung kann dabei insbesondere aus demselben Material wie das zweite Ringelement bestehen und liegt bevorzugt mit einer geringeren Kraft an der Außenhülse an als das erste Ringelement. Die Dichtung kann eine ringförmige Gestalt aufweisen und konzentrisch zur Ringscheibe verlaufen sowie z.B. in Form einer Dichtlippe ausgebildet sein.

In dem ersten Ringelement kann wenigstens ein in Längsrichtung durchgehender Schlitz vorgesehen sein, durch welchen hindurch sich ein die Dichtung bildender Teil des zweiten Ringelements erstreckt. Dabei sind das zweite Ringelement und die Dichtung insbesondere einstückig miteinander ausgebildet und durch den Schlitz hindurch miteinander verbunden. Somit ist die Herstellung besonders kostengünstig realisierbar, da das zweite Ringelement und die Dichtung in einem einzigen Fertigungsschritt hergestellt werden können. Ferner können die Schlitzränder der Dichtung Halt geben, so dass einem Umbiegen der Dichtung entgegengewirkt wird, was zu einer längeren Lebensdauer der Dichtung und somit zu einer langfristigen Abdichtung beiträgt. Auch werden durch diese Ausgestaltung die beiden Ringelemente in axialer Hinsicht formschlüssig aneinander festgelegt.

Insbesondere ist das Material des ersten Ringelements härter als das Material des zweiten Ringelements, so dass das erste Ringelement der Ringscheibe insgesamt Stabilität verleiht. Ferner ist es möglich, dass das Material des ersten Ringelements härter als das Material der Dichtung ist.

Bevorzugt bestehen das erste Ringelement und/oder das zweite Ringelement und/oder die Dichtung aus Kunststoff, wobei sich Polyoxymethylen (POM) für das erste Ringelement als geeigneter, insbesondere formstabiler Werkstoff erwiesen hat. Bevorzugter Werkstoff für das zweite Ringelement und/oder die Dichtung ist Polyurethan (PUR), wobei PUR regelmäßig weicher als POM ist.

Zur Ausbildung einer drehfesten Verbindung zwischen den beiden Ringelementen kann das erste Ringelement wenigstens eine Ausnehmung aufweisen, in welche ein Vorsprung des zweiten Ringelements eingreift.

Die Erfindung betrifft ferner ein Gleitlager mit einem Innenteil, an dessen einem Ende eine Außenschulter vorgesehen ist, einer das Innenteil umfassenden und um dessen Längsachse drehbar gelagerten Außenhülse und wenigstens einem erfindungsgemäßen Ringelement, welches in Richtung der Längsachse zwischen der Außenschulter und der Außenhülse angeordnet, insbesondere festgelegt ist. Dabei liegt das Ringelement zumindest mit seiner Dichtung an der Außenhülse an und kann gemäß den vorgenannten Ausgestaltungen ausgebildet sein.

Insbesondere ist die Außenhülse von einem Elastomerkörper umgeben, welcher wiederum von einer aus Metall (z.B. Stahl oder Aluminium) oder Kunststoff hergestellten Aufnahmehülse umgeben ist, so dass von dem erfindungsgemäßen Gleitlager ein elastisches Gleitlager gebildet wird. Ferner kann das Innenteil als Hülse ausgebildet sein, damit dieses von einem Kraftfahrzeugbauteil durchgriffen werden kann.

Das insbesondere aus Metall (z.B. Stahl oder Aluminium) bestehende Innenteil kann von einer Gleitschicht umgeben sein, die bevorzugt aus Kunststoff hergestellt ist, der eine geringe Haft- und Gleitreibung hinsichtlich der Innenmantelfläche der Außenhülse aufweist, die ebenfalls aus Metall (z.B. Stahl oder Aluminium) herstellbar ist. Die Gleitschicht ist dabei drehfest an dem Innenteil befestigt und kann insbesondere Schmiermittelnuten aufweisen, die als Reservoire für ein zwischen der Gleitschicht und der Außenhülse eingebrachtes Schmiermittel dienen.

Die Außenschulter ist bevorzugt unmittelbar an dem Innenteil befestigt. Da die Gleitschicht und das Innenteil aber eine Einheit bilden können, kann die Außenschulter auch an der Gleitschicht angeordnet sein. In diesem Fall ist die Außenschulter lediglich mittelbar an dem Innenteil befestigt.

Die Außenschulter kann einstückig mit dem Innenteil ausgebildet sein. Bevorzugt weist das Innenteil aber an wenigstens einem Ende eine Kappe auf, von welcher die Außenschulter gebildet ist. Dabei besteht diese Kappe insbesondere aus Metall wie zum Beispiel Stahl und kann reibschlüssig in die Bohrung des bevorzugt als Hülse ausgebildeten Innenteils eingreifen, so dass eine Presspassung zwischen dem Innenteil und der Kappe gebildet ist.

Die Ringscheibe liegt bevorzugt unmittelbar an der Außenschulter und an der Außenhülse an und ist dabei insbesondere zwischen der Außenschulter und der Außenhülse komprimiert, so dass kurzfristigen Kontaktverlusten zwischen Dichtung und Außenhülse entgegengewirkt werden kann.

Die Materialien für das erste und das zweite Ringelement können dabei derart gewählt werden, dass die Haftreibung zwischen der Ringscheibe und der Kappe größer ist als die Haft- bzw. Gleitreibung zwischen der Ringscheibe und der Außenhülse.

Bevorzugt weist das Gleitlager zwei erfindungsgemäße Ringscheiben auf, wobei an dem anderen Ende des Innenteils eine zweite Außenschulter vorgesehen ist. Das zweite Ringelement ist dabei in Richtung der Längsachse zwischen der zweiten Außenschulter und der Außenhülse angeordnet, insbesondere festgelegt. Die beiden Ringelemente können identisch ausgebildet sein, wobei auch das zweite Ringelement mit seiner Dichtung an der Außenhülse anliegt. Ferner kann die zweite Außenschulter von einer an dem zweiten Ende des Innenteils vorgesehenen zweiten Kappe gebildet sein.

Das erfindungsgemäße Gleitlager wird bevorzugt in Kraftfahrzeugen eingesetzt und kann dort zum Beispiel für die Anbindung eines oberen Querlenkers an das Chassis dienen.

Die Erfindung wird nachfolgend anhand einer bevorzugten Ausführungsform unter Bezugnahme auf die Zeichnung beschrieben. In der Zeichnung zeigen:
- Figur 1:: eine Schnittansicht eines Gleitlagers, in dem zwei Ringscheiben gemäß einer Ausführungsform der Erfindung eingebaut sind,
- Figur 2:: eine Schnittansicht der aus Fig. 1 ersichtlichen oberen Ringscheibe, welche entlang der in Figur 1 gezeigten Schnittlinie A-A' geschnitten ist,
- Figur 3:: eine Schnittansicht der aus Fig. 1 ersichtlichen oberen Ringscheibe, welche entlang der in Figur 2 gezeigten Schnittlinie D-D' geschnitten ist,
- Figur 4:: eine vergrößerte Ansicht des in Figur 3 mit X bezeichneten Bereichs und
- Figur 5:: eine Schnittansicht der aus Fig. 1 ersichtlichen oberen Ringscheibe, welche entlang der in Figur 2 gezeigten Schnittlinie B-B' geschnitten ist.

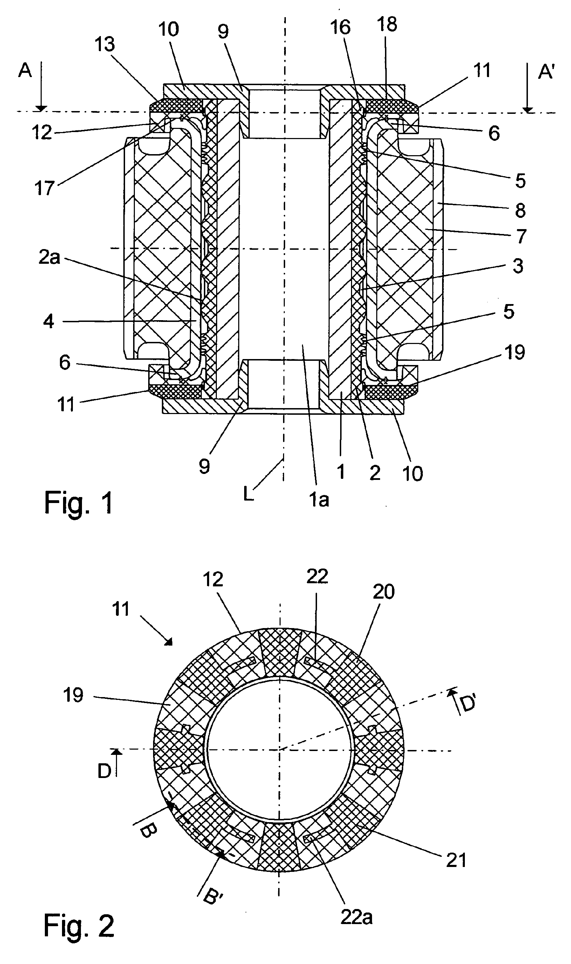

Aus Figur 1 ist eine Schnittansicht eines Gleitlagers ersichtlich, welches eine insbesondere aus Stahl hergestellte Innenhülse 1 und eine diese umgebende Gleitschicht 2 aus Kunststoff aufweist, welche drehfest an der Innenhülse 1 befestigt ist. Die Gleitschicht 2 weist an ihrer Außenmantelfläche 2a Schmiernuten 3 auf, die mit einem nicht dargestellten Schmiermittel gefüllt sind. Dabei ist die Gleitschicht 2 von einer insbesondere aus Aluminium bestehenden Außenhülse 4 umgeben, welche unter Zwischenschaltung des Schmiermittels an der Gleitschicht 2 anliegt und relativ zu dieser und zu der Innenhülse 1 um die Längsachse L des Lagers drehbar ist. Ferner sind an der Gleitschicht ringförmige Dichtelemente 5 ausgebildet zwischen denen die Schmiernuten 3 in Längsrichtung L angeordnet sind.

Die Außenhülse 4 weist an ihren Enden radial nach außen gerichtete Abwinklungen 6 auf und ist zwischen diesen von einem Elastomerkörper 7 umgeben, der wiederum von einer insbesondere aus Aluminium hergestellten Aufnahmehülse 8 umgeben ist. Dabei sind die Außenhülse 4 und die Aufnahmehülse 8 über den Elastomerkörper 7 drehfest miteinander, z.B. über Vulkanisation, verbunden.

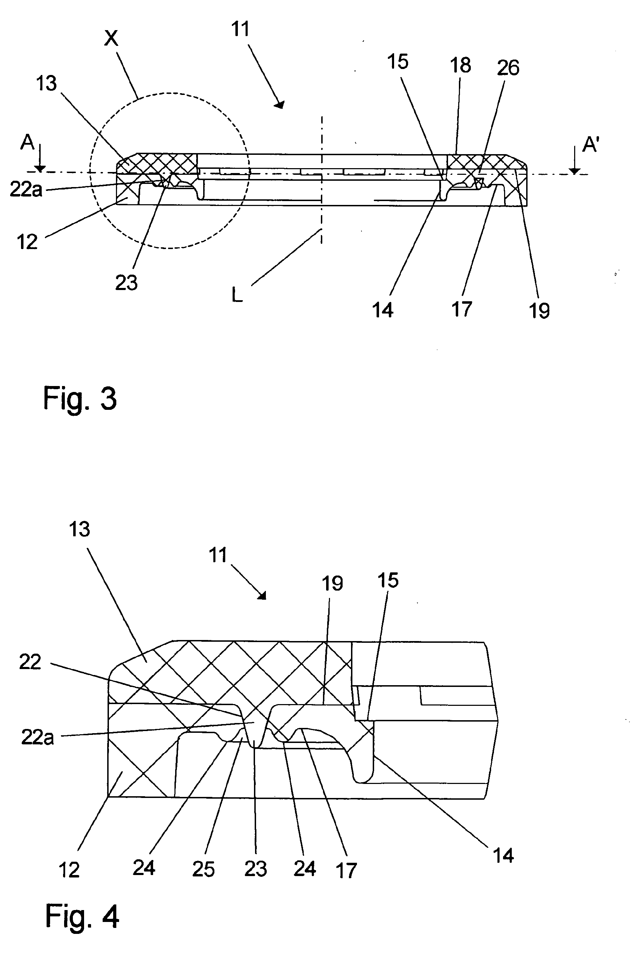

An den Enden der Innenhülse 1 ist jeweils eine insbesondere aus Stahl hergestellte Kappe 9 befestigt, die in die Durchgangsbohrung 1a der Innenhülse 1 eingreift und dort mit dieser über eine Presspassung drehfest verbunden ist. Jede Kappe 9 erstreckt sich mit einer insbesondere ringförmigen Außenschulter 10 radial nach außen, wobei zwischen den Außenschultern 10 und den Abwinkelungen 6 der Außenhülse 2 jeweils eine Ringscheibe 11 gemäß einer Ausführungsform der Erfindung angeordnet ist. Die beiden Ringscheiben 11 sind identisch ausgebildet und jeweils aus einem ersten Ringelement 12 und einem zweiten Ringelement 13 zusammengesetzt. Zum Fixieren der Ringscheiben 11 insbesondere während der Montage ist an der Innenmantelfläche 14 (Figur 3) des ersten Ringelements 12 eine Innenschulter 15 (Figur 3) vorgesehen, die an einem an der Gleitschicht 2 ausgebildeten und radial nach außen weisenden Vorsprung 16 anliegt. Die Ringscheiben 11 liegen mit Ihrer der Außenhülse 4 zugewandten Stirnseite 17 an den Abwinklungen 6 der Außenhülse 4 an, wohingegen die zweite Stirnseite 18 jeder Ringscheibe 11 an der jeweiligen Außenschulter 10 anliegt. Dabei ist jede Ringscheibe 11 zwischen der jeweiligen Außenschulter 10 und der Außenhülse 2 komprimiert.

Ferner sind die Innenhülse 1, die Gleitschicht 2, die Außenhülse 4, die Aufnahmehülse 8 und die Ringscheiben 11 konzentrisch zueinander angeordnet, so dass deren Längsachsen mit der Längsachse L des Lagers zusammenfallen.

Das erste Ringelement 12 ist insbesondere aus dem relativ harten und formstabilen Kunststoff "POM" hergestellt, welcher eine niedrige Haft- bzw. Gleitreibung zu der bevorzugt aus Aluminium hergestellten Außenhülse 4 aufweist, wohingegen das zweite Ringelement 13 insbesondere aus dem Kunststoff "PUR" hergestellt ist, welcher eine relativ hohe Haftreibung hinsichtlich der bevorzugt aus Stahl hergestellten Kappe 9 aufweist. Da das erste Ringelement 12 aus einem härteren Werkstoff als das zweite Ringelement 13 besteht, verleiht das erste Ringelement 12 der Ringscheibe 11 insgesamt Stabilität. Ferner ist durch die relativ hohe Haftreibung zwischen dem zweiten Ringelement 13 und der Kappe 9 sowie der relativ geringen Haft- bzw. Gleitreibung zwischen dem ersten Ringelement 12 und der Außenhülse 4 sichergestellt, dass sich die Ringscheiben 11 bei einem Verdrehen der Außenhülse 4 relativ zur Innenhülse 1 nicht mitdrehen. Vielmehr wird sich aufgrund des Zwei-Komponenten-Designs der Ringscheiben 11 ein Gleiten zwischen der ersten Stirnseite 17 und der Außenhülse 4 einstellen.

Aus Figur 2 ist eine Draufsicht auf die obere der in Figur 1 gezeigten Ringscheiben 11 ersichtlich, welche entlang der in Fig. 1 gezeigten Schnittlinie A-A' geschnitten ist. Das erste Ringelement 12 weist an seiner dem zweiten Ringelement 13 zugewandten Stirnseite 19 mehrere Ausnehmungen 20 auf, in welche das zweite Ringelement 13 mit Vorsprüngen 21 eingreift. Ferner sind in dem ersten Ringelement 12 mehrere in Längsrichtung L durchgehende Schlitze 22 ausgebildet, durch welche sich Stege 22a des zweiten Ringelements 13 hindurch erstrecken. Dabei liegen die Schlitze 22 alle auf einem zur Längsachse L konzentrischem Kreis und weisen einen Abstand zueinander auf.

Aus Figur 3 ist eine Schnittansicht der oberen Ringscheibe 11 ersichtlich, welche entlang der in Fig. 2 gezeigten Schnittlinie D-D' geschnitten ist. Die die Schlitze 22 durchsetzenden Stege 22a des zweiten Ringelements 13 bilden dabei an der Stirnseite 17 der Ringscheibe 11 eine durchgehend ringförmige Dichtlippe 23 aus, die im eingebauten Zustand der Ringscheibe 11 an den Abwinklungen 6 der Außenhülse 4 anliegt und eine zusätzliche Dichtung bildet, die auch langfristig ein Eindringen von Feuchtigkeit und Verunreinigungen sowie ein Austritt von Schmiermittel verhindert. Zwischen zwei benachbarten Schlitzen 22 weist das erste Ringelement 12 einen Bereich 26 auf, der zwischen dem zweiten Ringelement 13 und der einstückig mit diesem ausgebildeten Dichtlippe 23 angeordnet ist, so dass die beiden Ringelemente 12, 13 in axialer Hinsicht formschlüssig aneinander festgelegt sind.

Aus Figur 4 ist eine vergrößerte Ansicht des aus Figur 3 mit X gekennzeichneten Ausschnitts ersichtlich, wobei deutlich wird, dass die Dichtlippe 23 zwischen zwei an der Stirnfläche 17 der Ringscheibe 11 vorgesehenen axialen Vorsprüngen 24 angeordnet ist, die insbesondere ringförmig verlaufen. Im eingebauten Zustand der Ringscheibe 11 liegen die beiden Vorsprünge 24 und die Dichtlippe 23 an den Abwinklungen 6 der Außenhülse 4 an, wobei der zwischen den Vorsprüngen 24 ausgebildete Raum 25 breiter als die Dichtlippe 23 ist. Dagegen liegt die Dichtlippe 23 bzw. der Steg 22a im Bereich oberhalb des Raums 25 unmittelbar an den Rändern der Schlitze 22 an, deren Breite mit zunehmendem Abstand von der Stirnseite 19 abnimmt, bis die Schlitze 22 in den breiteren Raum 25 übergehen.

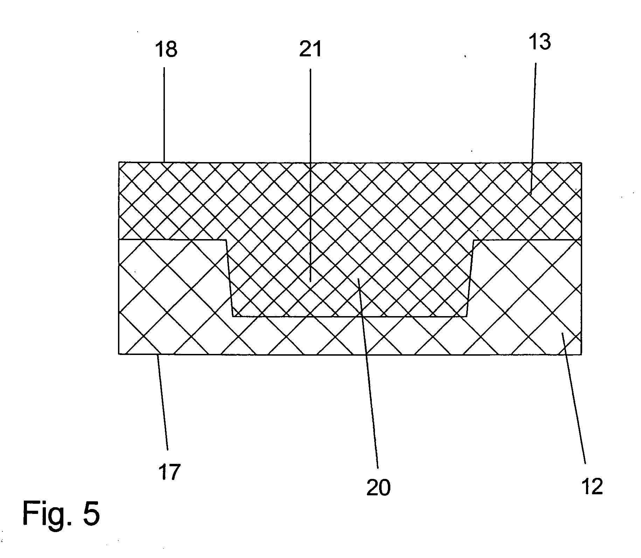

Aus Figur 5 ist eine Schnittansicht der oberen Ringscheibe 11 ersichtlich, welche entlang der in Figur 2 gezeigten Schnittlinie B-B' geschnitten ist. Die in dem ersten Ringelement 12 vorgesehenen Ausnehmungen 20 weisen einen leicht trapezförmigen Querschnitt auf, so dass die ebenfalls leicht trapezförmigen Vorsprünge 21 des zweiten Ringelements 13 problemlos in die Ausnehmungen 20 eingesetzt werden können. Die Ausnehmungen 20 und die Vorsprünge 21 dienen zusätzlich zu den Schlitzen 22 als formschlüssige Verdrehsicherung zwischen den beiden Ringelementen 12, 13.

Die Herstellung der Ringscheibe 11 kann dadurch erfolgen, dass nach der Fertigung des ersten Ringelements 12, dieses in eine Spritzgießform eingelegt wird und dann das zweite Ringelement 13 im Kunststoff-Spritzgießverfahren auf das erste Ringelement 12 aufgespritzt wird. Dabei formt sich das Material des zweiten Ringelements 13 in die Ausnehmungen 20 ein und durchsetzt die Schlitze 22 zum Ausbilden der durchgehend ringförmigen Dichtlippe 23.

### Bezugszeichenliste

- 1: Innenhülse
- 1a: durchgehende Bohrung in Innenhülse
- 2: Gleitschicht
- 2a: Außenmantelfläche der Gleitschicht
- 3: Schmiernuten in Gleitschicht
- 4: Außenhülse
- 5: ringförmige Dichtelemente der Gleitschicht
- 6: Abwinklungen der Außenhülse
- 7: Elastomerkörper
- 8: Aufnahmehülse
- 9: Kappe
- 10: Außenschulter
- 11: Ringscheibe
- 12: erstes Ringelement
- 13: zweites Ringelement
- 14: Innenmantelfläche des ersten Ringelements
- 15: Innenschulter an erstem Ringelement
- 16: radialer Vorsprung an Gleitschicht
- 17: Stirnfläche der Ringscheibe, der Außenhülse zugewandt
- 18: Stirnfläche der Ringscheibe, der Kappe zugewandt
- 19: Stirnfläche des ersten Ringelements, dem zweiten Ringelement zugewandt
- 20: Ausnehmungen im ersten Ringelement
- 21: Vorsprünge des zweiten Ringelements
- 22: Schlitze im ersten Ringelement
- 22a: Stege des zweiten Ringelements
- 23: Dichtlippe
- 24: axiale Vorsprünge
- 25: Raum zwischen den axialen Vorsprüngen
- 26: Bereich des ersten Ringelements zwischen Dichtlippe und zweitem Ringelement
- L: Längsachse

## Patentansprüche

1. Ringscheibe für ein Gleitlager, mit einem ersten Ringelement (12) und einer an dessen erster Stirnseite (17) angeordneten Dichtung (23),
**dadurch gekennzeichnet, dass** an der zweiten Stirnseite (19) des ersten Ringelements (12) ein zweites Ringelement (13) befestigt ist, wobei die beiden Ringelemente (12, 13) aus unterschiedlichen Materialien bestehen.

2. Ringscheibe nach Anspruch 1,
**dadurch gekennzeichnet, dass** das zweite Ringelement (13) und die Dichtung (23) aus demselben Material bestehen.

3. Ringscheibe nach Anspruch 1 oder 2,
**dadurch gekennzeichnet, dass** in dem ersten Ringelement (12) wenigstens ein in Längsrichtung (L) durchgehender Schlitz (22) vorgesehen ist, durch welchen hindurch sich ein mit der Dichtung (23) einstückig ausgebildeter Steg (22a) des zweiten Ringelements (13) erstreckt.

4. Ringscheibe nach einem der vorangehenden Ansprüche,
**dadurch gekennzeichnet, dass** die Dichtung (23) ringförmig ausgebildet und konzentrisch zur Ringscheibe (11) angeordnet ist.

5. Ringscheibe nach einem der vorangehenden Ansprüche,
**dadurch gekennzeichnet, dass** die Dichtung (23) in Form einer Dichtlippe ausgebildet ist.

6. Ringscheibe nach einem der vorangehenden Ansprüche,
**dadurch gekennzeichnet, dass** das Material des ersten Ringelements (12) härter als das Material des zweiten Ringelements (13) ist, also eine größere Shorehärte aufweist.

7. Ringscheibe nach einem der vorangehenden Ansprüche,
**dadurch gekennzeichnet, dass** das Material des ersten Ringelements (12) härter als das Material der Dichtung (23) ist, also eine größere Shorehärte aufweist.

8. Ringscheibe nach einem der vorangehenden Ansprüche,
**dadurch gekennzeichnet, dass** das erste Ringelement (12) und/oder das zweite Ringelement (13) und/oder die Dichtung (23) aus Kunststoff bestehen.

9. Ringscheibe nach einem der vorangehenden Ansprüche,
**dadurch gekennzeichnet, dass** das erste Ringelement (12) aus Polyoxymethylen besteht.

10. Ringscheibe nach einem der vorangehenden Ansprüche,
**dadurch gekennzeichnet, dass** das zweite Ringelement (13) und/oder die Dichtung (23) aus Polyurethan bestehen.

11. Ringscheibe nach einem der vorangehenden Ansprüche,
**dadurch gekennzeichnet, dass** das erste Ringelement (12) wenigstens eine Ausnehmung (20) aufweist, in welche ein Vorsprung (21) des zweiten Ringelements (13) eingreift.

12. Gleitlager mit einem Ringelement nach einem der vorangehenden Ansprüche, wobei das Gleitlager ein Innenteil (1), an dessen einem Ende eine Außenschulter (10) vorgesehen ist, und eine das Innenteil (1) umfassende und um dessen Längsachse (L) drehbar gelagerte Außenhülse (4) aufweist, wobei das Ringelement (11) in Richtung der Längsachse (L) zwischen der Außenschulter (10) und der Außenhülse (4) angeordnet ist und mit seiner Dichtung (23) an der Außenhülse (4) anliegt.

13. Gleitlager nach Anspruch 12,
**dadurch gekennzeichnet, dass** die Außenhülse (4) von einem Elastomerkörper (7) umgeben ist, welcher von einer Aufnahmehülse (8) umgeben ist.

14. Gleitlager nach Anspruch 12 oder 13,
**dadurch gekennzeichnet, dass** das Innenteil (1) als Hülse ausgebildet ist.

15. Gleitlager nach einem der Ansprüche 12 bis 14,
**dadurch gekennzeichnet, dass** das Innenteil (1) eine das Innenteil (1) umgebende Gleitschicht (2) aufweist.

16. Gleitlager nach einem der Ansprüche 12 bis 15,
**dadurch gekennzeichnet, dass** das Innenteil (1) an wenigstens einem Ende eine Kappe (9) aufweist, von welcher die Außenschulter (10) gebildet ist.

17. Gleitlager nach einem der Ansprüche 12 bis 16,
**dadurch gekennzeichnet, dass** an dem anderen Ende des Innenteils (1) eine zweite Außenschulter (10) vorgesehen ist, und ein zweites Ringelement (11) in Richtung der Längsachse (L) zwischen der zweiten Außenschulter (10) und der Außenhülse (4) angeordnet ist, wobei die beiden Ringelemente (11) identisch ausgebildet sind und das zweite Ringelement (11) mit seiner Dichtung (23) an der Außenhülse (4) anliegt.
